# EUROPEAN PATENT APPLICATION

(11) **EP 2 911 404 A1**
(43) Date of publication of application: **26.08.2015**
(21) Application number: 13848416.7
(22) Date of filing: 21.08.2013
(51) Int. Cl.: H04N 21/25, H04N 21/2543, H04N 21/258, H04N 21/2665, H04L 29/06, H04N 21/643

(54) **IPTV VALUE-ADDED SERVICE MANAGEMENT SYSTEM AND METHOD**

(30) Priority: 22.10.2012 CN 201210404375
(71) Applicant: ZTE Corporation, Shenzhen, Guangdong 518057 (CN)
(72) Inventor: YANG, Fan, Shenzhen, Guangdong 518057 (CN)
(74) Representative: Mozzi, Matteo
(86) International application number: PCT/CN2013/081999
(87) International publication number: WO 2014/063523

(57) **Abstract**

Provided are a system and a method for IPTV value-added service management, wherein the system includes: an interface module, configured to interact with IPTV capability platforms providing IPTV value-added services to acquire IPTV value-added service information from the IPTV capability platforms; and a sending module, configured to send, to the IPTV capability platforms, consumption information of the IPTV value-added services provided by the IPTV capability platforms. Through the embodiments of the present invention, the unified management of IPTV value-added services is realized and the development environment of IPTV value-added services is improved.

## Description

### Technical Field

The present invention relates to the communication field, in particular to a system and a method for IPTV value-added service management.

### Background

With the vigorous promotion and popularization of Internet Protocol Television (IPTV) by operators, the basic service market of IPTV is gradually saturated, and the profit from IPTV value-added services becomes a direction for the future development to IPTV.

As the increase of IPTV value-added services, there are excessive IPTV value-added services on the limited IPTV screens, so such services are disordered and difficult to manage. For example, providers provide users with IPTV value-added services, and charge these services; however, each provider has to develop a charging system and a portal, and cannot concentrate resources to develop IPTV value-added services. Furthermore, users register accounts and recharge for different providers, but the consumption is impossible on another IPTV value-added service because providers are independent from one another.

Currently, there is no effective solution for the problems of increase of IPTV value-added services and the difficult management thereof in the related art.

### Summary

The embodiments of the present invention provide a system and a method for IPTV value-added service management to at least solve the problems of increase of IPTV value-added services and the difficult management thereof in the related art.

According to one embodiment of the present invention, a system for IPTV value-added service management is provided, including: an interface module, configured to interact with IPTV capability platforms providing IPTV value-added services to acquire IPTV value-added service information from the IPTV capability platforms; and a sending module, configured to send, to the IPTV capability platforms, consumption information of the IPTV value-added services provided by the IPTV capability platforms.

In an example embodiment, the interface module is further configured to acquire IPTV value-added services of the IPTV capability platforms; and the system further includes: a service module, configured to execute the IPTV value-added services of the IPTV capability platforms according to access requests from a user.

In an example embodiment, the system further includes: a portal module, configured to provide the user with an access interface of IPTV value-added services, and access, in responsive to the access requests for IPTV value-added services from the user, the corresponding IPTV value-added services according to the access requests.

In an example embodiment, the system further includes: an authentication charging module, configured to interact with an IPTV management adaptation gateway for unified charging of consumption of IPTV value-added services from a user on different IPTV capability platforms.

In an example embodiment, the system further includes: a background management module, configured to manage IPTV value-added services from different IPTV capability platforms.

According to another embodiment of the present invention, a method for IPTV value-added service management is provided, including: acquiring IPTV value-added service information from IPTV capability platforms; and, sending, to the IPTV capability platforms, consumption information of the IPTV value-added services provided by the IPTV capability platforms.

In an example embodiment, the method further includes: acquiring IPTV value-added services of the IPTV capability platforms; and executing the IPTV value-added services of the IPTV capability platforms according to access requests from a user.

In an example embodiment, the method further includes: responding to the access requests for the IPTV value-added services submitted by the user through an access interface of IPTV value-added services; and accessing the corresponding IPTV value-added services according to the access requests.

In an example embodiment, the method further includes: interacting with an IPTV management adaptation gateway for unified charging of consumption of IPTV value-added services from a user on different IPTV capability platforms.

In an example embodiment, the method further includes: managing the IPTV value-added services from different IPTV capability platforms.

In the embodiments of the present invention, the interface module of the system for IPTV value-added service management interacts with the IPTV capability platforms providing IPTV value-added services to acquire the IPTV value-added services from the IPTV capability platforms, and the sending module sends, to the IPTV capability platforms, consumption information of the IPTV value-added services provided by the IPTV capability platforms. By virtue of the embodiments, unified management of IPTV value-added services is realized and the development environment of IPTV value-added services is improved.

### Brief Description of the Drawings

The drawings illustrated here are to provide further understanding of the present invention and constitute one part of the application, and the exemplary embodiments of the present invention and the explanations thereof are intended to explain the present invention, instead of improperly limiting the present invention. In the drawings:
Fig. 1 shows a diagram of a system for IPTV value-added service management according to one embodiment of the present invention;
Fig. 2 shows diagram 1 of a system for IPTV value-added service management according to one example embodiment of the present invention;
Fig. 3 shows diagram 2 of a system for IPTV value-added service management according to one example embodiment of the present invention;
Fig. 4 shows diagram 3 of a system for IPTV value-added service management according to one example embodiment of the present invention;
Fig. 5 shows diagram 4 of a system for IPTV value-added service management according to one example embodiment of the present invention;
Fig. 6 shows a flowchart of a method for IPTV value-added service management according to one embodiment of the present invention;
Fig. 7 shows a diagram of the functions of a management portal functional module according to one embodiment of the present invention;
Fig. 8 shows a diagram of the connections of a system for IPTV value-added service management according to one embodiment of the present invention;
Fig. 9 shows a diagram of the location of a system for IPTV value-added service management in a network according to one embodiment of the present invention; and
Fig. 10 shows a flowchart of recharging and consumption of a user according to one embodiment of the present invention.

### Detailed Description of the Embodiments

The present invention will be described below with reference to the drawings and embodiments in detail. It should be noted that, in the case of no conflict, the embodiments of the application and features therein can be combined with one another.

### First embodiment

According to one embodiment of the present invention, a system for IPTV value-added service management is provided, which can perform the unified management of IPTV value-added services.

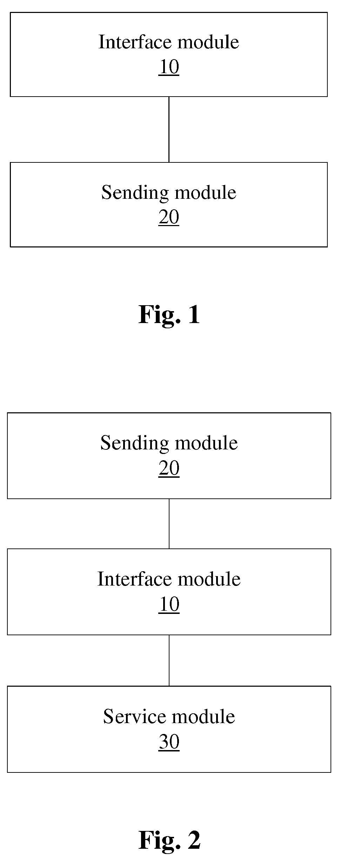

Fig. 1 shows a diagram of a system for IPTV value-added service management according to one embodiment of the present invention. As shown, the system mainly includes: an interface module 10 and a sending module 20. The interface module 10 is configured to interact with IPTV capability platforms providing IPTV value-added services to acquire IPTV value-added service information from the IPTV capability platforms. The sending module 20 is configured to send, to the IPTV capability platforms, consumption information of the IPTV value-added services provided by the IPTV capability platforms.

In the embodiment of the present invention, the system for IPTV value-added service management provides the interface module 10 for interacting with the IPTV capability platforms which further interacts with the system for IPTV value-added service management through the interface module to send IPTV value-added service information, and the system for IPTV value-added service management sends, to the IPTV capability platforms, consumption information of the IPTV value-added services provided by the IPTV capability platforms through the sending module 20. By virtue of this system, the unified management of IPTV value-added services from different IPTV capability platforms is possible.

In practical applications, some IPTV value-added service providers do not have the capability of developing an IPTV value-added service system, for example, developing an IPTV value-added service providing portal and charging management. In one implementation approach of the embodiment of the present invention, IPTV value-added service providers may only develop IPTV value-added services and are not required to develop other systems. The system for realizing this function is explained with reference to Fig. 2 below.

Fig. 2 shows diagram 1 of a system for IPTV value-added service management according to one example embodiment of the present invention. As shown, the interface module 10 is further configured to acquire IPTV value-added services of the IPTV capability platforms; and the system may further include: a service module 30, configured to execute the IPTV value-added services of the IPTV capability platforms according to access requests from a user. Through the example implementation approach, the IPTV capability platform uploads the IPTV value-added service to the system for IPTV value-added service management, and the service module 30 of the system executes the IPTV value-added service of the IPTV capability platform according to the access request from the user. In this way, the IPTV value-added service providers can develop the IPTV value-added service only without any need to repeatedly develop the support system for providing services.

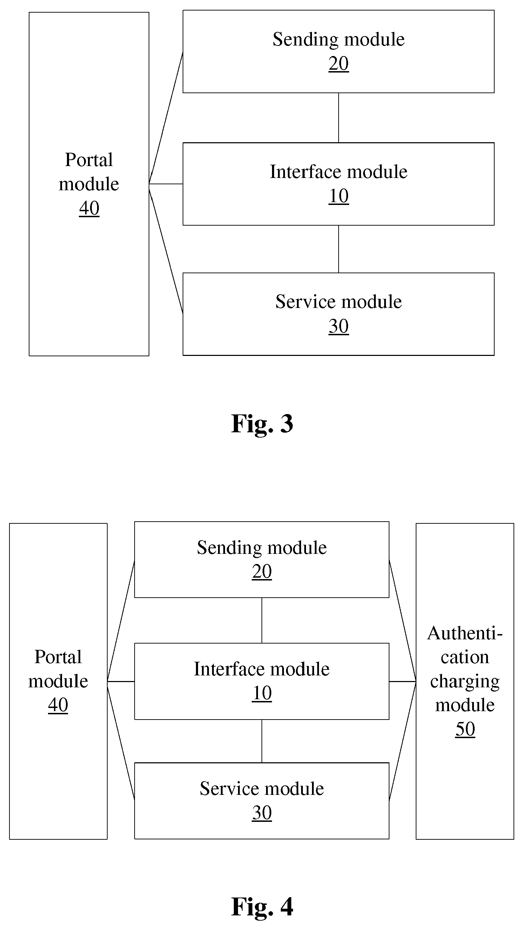

In the related art, the IPTV value-added service provided by each IPTV capability platform is present to a user through its own portal, and the user is required to access the portal of another IPTV capability platform when the user needs to access a value-added service provided by the IPTV capability platform, reducing the user experience of IPTV value-added service and wasting a large number of resources due to the development of portal by each IPTV value-added service provider. In one implementation approach of the embodiment of the present invention, the IPTV capability platform can provide the user with its IPTV value-added services through a unified portal, and the system according to one example embodiment is described with reference to Fig. 3 below.

Fig. 3 shows diagram 2 of a system for IPTV value-added service management according to one example embodiment of the present invention. As shown, the system further includes: a portal module 40, configured to provide the user with an access interface of IPTV value-added services, respond to the access requests for IPTV value-added services from the user, and access, in responsive to the access requests for IPTV value-added services from the user, the corresponding IPTV value-added services according to the access requests. Through the example implementation approach, a unified access portal of IPTV value-added services is provided for the user. The value-added services from many IPTV capability platforms are presented for the user in the unified access portal, to avoid complex operations and save the resources of operators.

In the related art, each IPTV capability platform is required to provide the functions such as charging and authentication, adding many repeated development tasks. In addition, the user is also required to register accounts and recharge on different IPTV capability platforms on which the charging is performed respectively and the accounts are not interoperable (for example, the user cannot consume, by using the fund on one IPTV capability platform, the IPTV value-added service on another IPTV capability platform), reducing the user experience of IPTV value-added service. In one implementation approach of the embodiment of the present invention, the unified management of users can be realized, and the system according to one example embodiment of the present invention is described with reference to Fig. 4 below.

Fig. 4 shows diagram 3 of a system for IPTV value-added service management according to one example embodiment of the present invention. As shown, the system may further include: an authentication charging module 50, configured to interact with an IPTV management adaptation gateway for unified charging of consumption of IPTV value-added services from a user on different IPTV capability platforms. Through the example implementation approach, a unified account is provided for the user, in which the fund can be consumed for the IPTV value-added services from different IPTV capability platforms. The authentication charging module 50 interacts with the IPTV management adaptation gateway for charging value-added services, avoiding developing the charging function for different IPTV capability platforms repeatedly and saving the resources of providers.

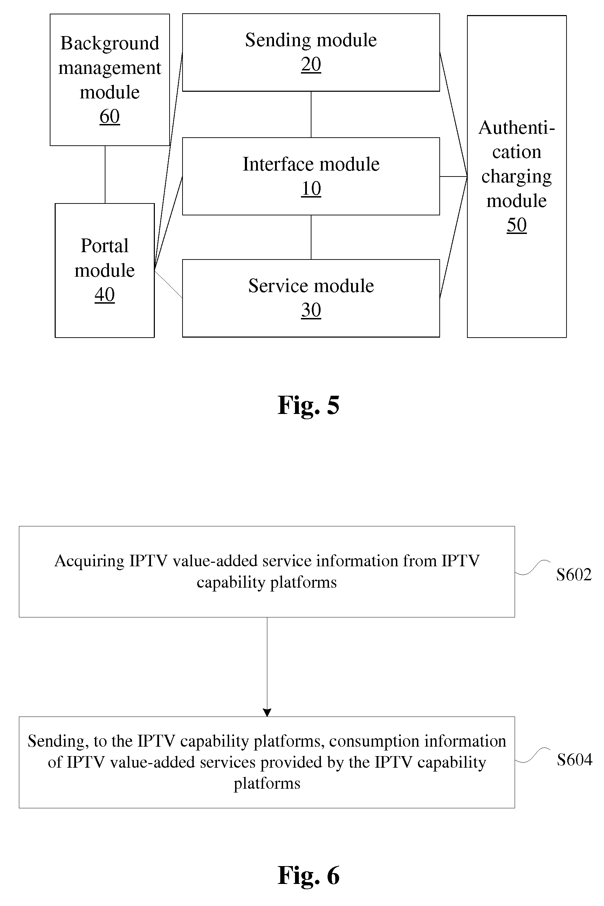

In the embodiment of the present invention, to provide better access of IPTV value-added service, it is possible to manage the IPTV value-added services from different IPTV capability platforms, and the example implementation approach realizing this function according to one embodiment of the present invention is described with reference to Fig. 5 below.

Fig. 5 shows diagram 4 of a system for IPTV value-added service management according to one example embodiment of the present invention. As shown, the system may further include: a background management module 60, configured to manage the IPTV value-added services from different IPTV capability platforms. For example, the status information (online, offline, etc.) of different IPTV capability platforms is updated, and the IPTV value-added services are managed in category according to their types.

Through the embodiment of the present invention, different IPTV value-added service developers are only required to connect to the system of the embodiment of the present invention by following simple interface specifications, to realize the functions of presentation, authentication charging, virtual account management, statistics statements, user growth achievement system for example of each value-added service and the unified management of IPTV value-added services.

According to one embodiment of the present invention, a method for IPTV value-added service management is provided, which can realize the unified management of IPTV value-added services in the system according to one embodiment of the present invention above.

Fig. 6 shows a flowchart of a method for IPTV value-added service management according to one embodiment of the present invention. As shown, the method mainly includes Step 602 to Step 604:
Step 602, IPTV value-added service information is acquired from IPTV capability platforms; and
Step 604, consumption information of the IPTV value-added services provided by the IPTV capability platforms is sent to the IPTV capability platforms.

In the embodiment of the present invention, the IPTV value-added service information is acquired from the IPTV capability platforms and consumption information of IPTV value-added services provided by the IPTV capability platforms is sent to the IPTV capability platforms. In this way, unified management of IPTV value-added services from different IPTV capability platforms can be achieved.

In practical applications, some IPTV value-added service providers do not have the capability of developing an IPTV value-added service system, for example, developing an IPTV value-added service providing portal and charging management. In one implementation approach of the embodiment of the present invention, IPTV value-added service providers may only develop IPTV value-added services and are not required to develop other systems.

In one implementation approach of the embodiment of the present invention, to realize the function above, the method may further include: IPTV value-added services of the IPTV capability platforms are acquired, and the IPTV value-added services of the IPTV capability platforms are executed according to the access requests from a user. Through the example implementation approach, the IPTV capability platform uploads the IPTV value-added service to the system for IPTV value-added service management, and the system executes the IPTV value-added service of the IPTV capability platform according to the access request from the user. In this way, the IPTV value-added service providers can develop the IPTV value-added service only without any need to repeatedly develop the support system for providing services.

Furthermore, in the related art, the IPTV value-added service provided by each IPTV capability platform is present to a user through its own portal, and the user is required to access the portal of another IPTV capability platform when the user needs to access a value-added service provided by the IPTV capability platform, reducing the user experience of IPTV value-added service and wasting a large number of resources due to the development of portal by each IPTV value-added service provider.

In one implementation approach of the embodiment of the present invention, to avoid the problem above, the IPTV capability platform can provide a user with its own IPTV value-added services through a unified portal. The method may further include: the access requests for IPTV value-added services submitted by the user though an access interface of IPTV value-added services are responded; and the corresponding IPTV value-added services are accessed according to the access requests. Through the example implementation approach, a unified access portal of IPTV value-added services is provided for the user. The value-added services from many IPTV capability platforms are presented for the user in the unified access portal, to avoid complex operations and save the resources of operators.

Furthermore, in the related art, each IPTV capability platform is required to provide the functions such as charging and authentication, adding many repeated development tasks. In addition, a user is also required to register accounts and recharge on different IPTV capability platforms on which the charging is performed respectively and the accounts are not interoperable (for example, the user cannot consume, by using the fund on one IPTV capability platform, the IPTV value-added services on another IPTV capability platform), reducing the user experience of IPTV value-added service.

In an example embodiment, in one implementation approach of the embodiment of the present invention, the method may further include: an IPTV management adaptation gateway is interacted with for unified charging of consumption of IPTV value-added services from a user on different IPTV capability platforms. Through the example implementation approach, a unified account is provided for the user, in which the fund can be consumed for the IPTV value-added services from different IPTV capability platforms. The system for IPTV value-added service management interacts with the IPTV management adaptation gateway for charging value-added services, avoiding developing the charging function for different IPTV capability platforms repeatedly and saving the resources of providers.

In the embodiment of the present invention, to provide better access of IPTV value-added service, it is possible to manage the IPTV value-added services from different IPTV capability platforms. The method may further include: the IPTV value-added services from different IPTV capability platforms are managed. For example, the status information (online, offline, etc.) of different IPTV capability platforms is updated, and the IPTV value-added services are managed in category according to their types.

Through the embodiment of the present invention, different IPTV value-added service developers are only required to develop IPTV value-added services to realize the functions of presentation, authentication charging, virtual account management, statistics statements, user growth achievement system for example of each value-added service and the unified management of IPTV value-added services.

### Second embodiment

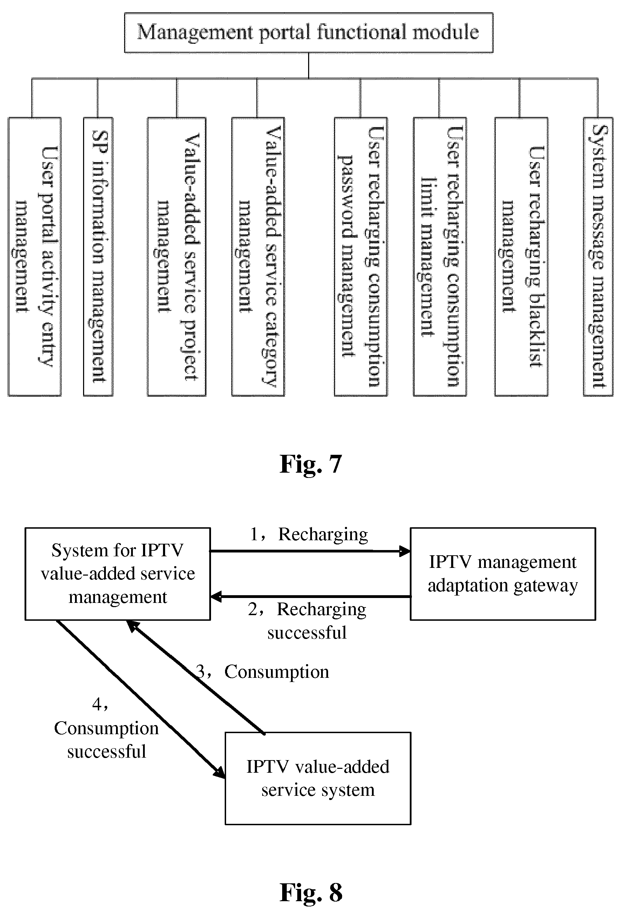

According to one embodiment of the present invention, a system for IPTV value-added service management is provided, which is divided into four functional modules: a user portal functional module, a management portal functional module, a recharging authentication functional module and a clearing functional module.
1) The user portal functional module (equivalent to the portal module in first embodiment) is configured to centrally present the value-added services of different manufacturers to an IPTV user. The IPTV user may access this page through a basic service Electronic Program Guide (EPG) entry. The page includes but is not limited to the following functions: support the presentation of value added display service category, activity area, etc. The user portal functional module also receives service parameters from the EPG, including IPTV (iTV) account, user group, location, return address, platform type, etc., and transparently transmits the parameters to link addresses of the user interface. In addition, the user portal functional module provides a user centre through which the user can query blacklist status, recharges, and consumption records by him/herself and set password, etc. The user portal functional module may also provide an inbox function through which the user can receive notification messages from the system. In practical applications, this page can be designed by an administrator on the background in the way of component drag and drop and published to the IPTV platform, which is simple and fast.
2) The management portal functional module (equivalent to the background management module in first embodiment) is a background portal module mainly for the daily operations of operators of a value-added service unified management system for the purpose of unified management and operation of accessing IPTV value-added services. The management portal functional module includes but is not limited to the functions as shown in Fig. 7 and mainly divided into a management part and a statistics part.
   The management part mainly includes user portal activity entry management, including links of entries, images and other information; Service Provider (SP) information management, including SP name, SP status (online, offline, pause), etc.; value-added service project management, including project name, SP to which projects belong, project status (online, offline, pause, test, etc.), brief introduction, images, type, address, etc., wherein the project address is a complete entry address directed to a value-added service SP and multiple project addresses may be set according to the IPTV platforms; value-added service category management, including value-added service project and the corresponding setting of category, a value-added service project being corresponding to multiple value-added service categories; and user recharging password management, user recharging limit management, user recharging blacklist management, system message management, etc.
   The statistics part mainly includes portal entry access statistics, based on time and district; user access view of each column; user recharging, consumption record query, and statistics, based on SP, time, and service area in practical applications; and statistics of user list within a range of recharging limit for the purpose of convenient targeted marketing.
3) The recharging authentication functional module is coupled with the system for IPTV value-added service management to realize the authentication and purchase for a user and provide recharging and consumption interfaces for systems of value-added service of partners and the functions of user password check function and user blacklist for example.
4) The clearing functional module is configured for virtual account management, including user recharging record query, consumption record query, etc.; and clearing management, an IPTV value-added service unified management system generating a consumption clearing statement monthly, and providing a clearing basis for an online charging system (OCS) which makes the clearing with value-added service manufacturers.

In the embodiment of the present invention, they system is capable of realizing the unified management of virtual currencies by providing interfaces, such as consumption interface for consumption of virtual currencies by users, query interface for query of virtual currencies by users, and charging interface for recharging of users in case of recharging on the value-added service portal.

The system according to embodiments of the present invention is described with reference to Figs. 8 to 10 below.

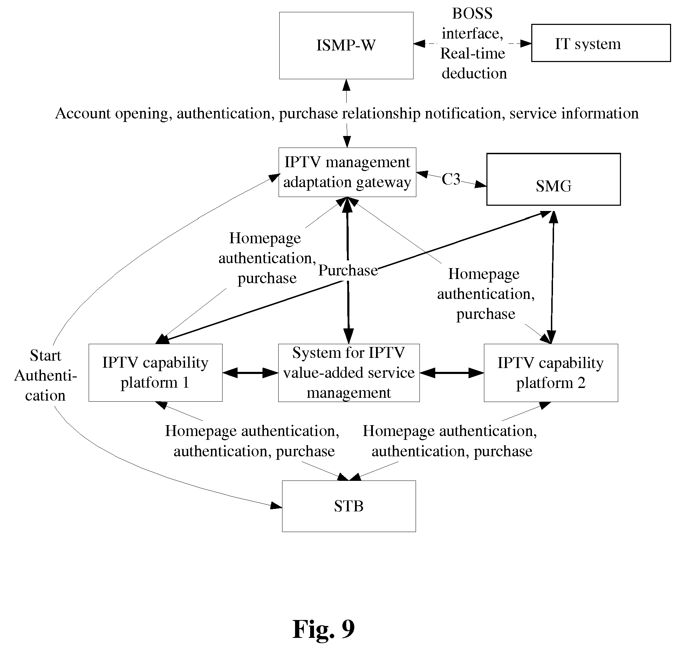

Fig. 8 shows a diagram of the connections of a system for IPTV value-added service management according to one embodiment of the present invention. As shown, the system for IPTV value-added service management is coupled with an IPTV value-added service system and an IPTV management adaptation gateway to finish the functions of recharging and consumption. Fig. 9 shows a diagram of the location of a system for IPTV value-added service management in a network according to one embodiment of the present invention. As shown, the front end of the system for IPTV value-added service management is coupled with multiple capability platforms to provide value-added service entries and acquire user identifier, user token, etc.; and the back end of the system for IPTV value-added service management is coupled with an IPTV management adaptation gateway to realize the unified purchase of users.

The interaction of the system according to the embodiment of the present invention is described by the way of example of recharging and consumption of users.

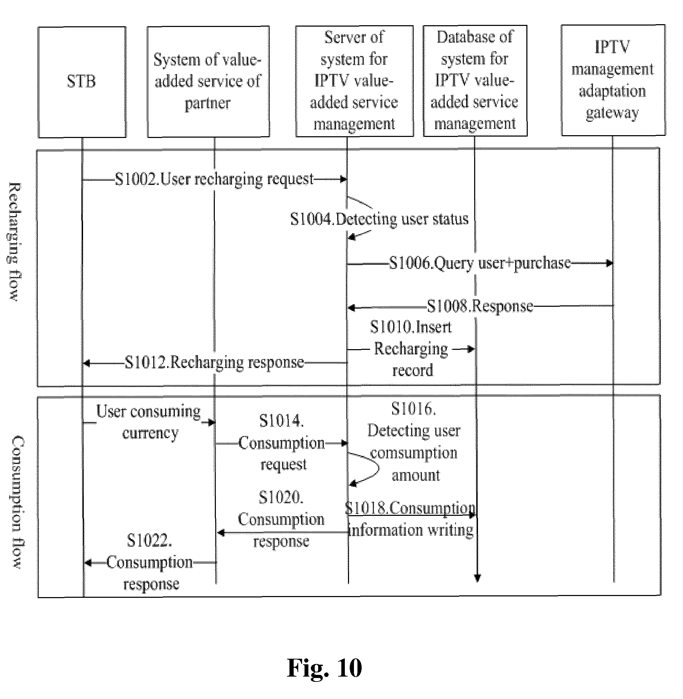

Fig. 10 shows a flowchart of recharging and consumption of a user according to one embodiment of the present invention. As shown, the process mainly includes Steps 1002 to 1022:
Step 1002, a set top box (STB) sends a request to a server of a system for IPTV value-added management;
Step 1004, the system for IPTV value-added service management defects the user status, (for example, whether a user's pseudo-code is in the blacklist, and if so, the user is not allowed to recharge), and checks the consumption record in the current month of the user to calculate whether the payment rate in the current month exceed the limit, and if so, the user is not allowed to recharge, etc.;
Step 1006, the system for IPTV value-added service management sends a purchase request to an IPTV management adaptation gateway;
Step 1008, the system for IPTV value-added service management receives a response message from the IPTV management adaptation gateway;
Step 1010, the system for IPTV value-added service management inserts a recharging record in a database (DB);
Step 1012, the system for IPTV value-added service management returns a recharging response to the STB;
Step 1014, a value-added service cooperative SP sends a consumption request to a service interface of the system for IPTV value-added service management;
Step 1016, the system for IPTV value-added service management receives the consumption request; and calls the storage process check: acquire the corresponding amount according to the sent recharging code, check whether the user is in the blacklist according to the pseudo-code thereof, and if so, the user is not allowed to make the payment, and check whether the user's balance is enough, and if not, the consumption by the user is not allowed;
Step 1018, after the consumption, the system for IPTV value-added service management writes the consumption information in the database; and
Steps 1020 to 1022, the system for IPTV value-added service management sends a consumption response to the STB and value-added service cooperative SP.

It can be seen from what described above that the present invention realizes the following technical effects:
1) each value-added service developer can focus on the development of value-added service, instead of wasting manpower and resources on the adaptation of IPTV basic service; 2) a unified user interface is provided for value-added services, and an administrator can edit the user interface online on the background, i.e., what you see is what you get, and the user interface can be published in real time for the browsing of users after the edition by the administrator; 3) a unified virtual account function is provided for value-added services to realize the one-time recharging at a unified notification entry by users and the consumption of all value-added services; 4) the functions of charging bills and benefit statements are provided for the OSC system to provide a unified user growth system for all the IPTV value-added services and make the construction of big community of IPTV value-added service possible.

Obviously, those skilled in the art shall understand that the modules or steps of the present invention may be implemented by general computing apparatus and centralized in a single computing apparatus or distributed in a network consisting of multiple computing apparatus. Optionally, the modules or steps may be implemented by program codes executable by the computing apparatus, so that they may be stored in a storage apparatus and executed by the computing apparatus, and, in some cases, the steps can be executed in a sequence different from the illustrated or described sequence, or they are respectively made into the integrated circuit modules or many of them are made into a single integrated circuit module. By doing so, the present invention is not limited to any specific combination of hardware and software.

What said above are only the example embodiments of the present invention and not intended to limit the present invention. For those skilled in the art, various modifications and changes can be made in the present invention. Any modifications, equivalent replacements, improvements and the like within the principle of the present invention shall fall within the scope of protection as defined by the appended claims of the present invention.

## Claims

1. A system for IPTV value-added service management, **characterized by** comprising:
an interface module, configured to interact with IPTV capability platforms providing IPTV value-added services to acquire IPTV value-added service information from the IPTV capability platforms; and
a sending module, configured to send, to the IPTV capability platforms, consumption information of the IPTV value-added services provided by the IPTV capability platforms.

2. The system according to claim 1, **characterized in that**
the interface module is further configured to acquire IPTV value-added services of the IPTV capability platforms; and
the system further includes: a service module, configured to execute the IPTV value-added services of the IPTV capability platforms according to access requests from a user.

3. The system according to claim 2, **characterized by** further comprising:
a portal module, configured to provide the user with an access interface of IPTV value-added services, and access, in responsive to the access requests for IPTV value-added services from the user, the corresponding IPTV value-added services according to the access requests.

4. The system according to any one of claims 1 to 3, **characterized by** further comprising:
an authentication charging module, configured to interact with an IPTV management adaptation gateway for unified charging of consumption of the IPTV value-added services from a user on different IPTV capability platforms.

5. The system according to any one of claims 1 to 3, **characterized by** further comprising:
a background management module, configured to manage IPTV value-added services from different IPTV capability platforms.

6. A method for IPTV value-added service management, **characterized by** comprising:
acquiring IPTV value-added service information from IPTV capability platforms; and
sending, to the IPTV capability platforms, consumption information of IPTV value-added services provided by the IPTV capability platforms.

7. The method according to claim 6, **characterized by** further comprising:
acquiring the IPTV value-added services of the IPTV capability platforms; and
executing the IPTV value-added services of the IPTV capability platforms according to access requests from a user.

8. The method according to claim 7, **characterized by** further comprising:
responding to the access requests for IPTV value-added services submitted by the user through an access interface of IPTV value-added services; and
accessing the corresponding IPTV value-added services according to the access requests.

9. The method according to any one of claims 6 to 8, **characterized by** further comprising:
interacting with an IPTV management adaptation gateway for unified charging of consumption of IPTV value-added services from a user on different IPTV capability platforms.

10. The method according to any one of claims 6 to 8, **characterized by** further comprising:
managing the IPTV value-added services from different IPTV capability platforms.
